(19) Europäisches Patentamt
European Patent Office
Office européen des brevets

(11) **EP 2 726 353 B1**

(12) **EUROPÄISCHE PATENTSCHRIFT**

(45) Veröffentlichungstag und Bekanntmachung des Hinweises auf die Patenterteilung:
**07.10.2020   Patentblatt 2020/41**

(21) Anmeldenummer: **12740293.1**

(22) Anmeldetag: **01.06.2012**

(51) Int Cl.:
**B60W 10/08** (2006.01)       **B60W 30/20** (2006.01)
**B60K 6/485** (2007.10)       **B60W 20/00** (2016.01)

(86) Internationale Anmeldenummer:
**PCT/DE2012/000578**

(87) Internationale Veröffentlichungsnummer:
**WO 2013/000448 (03.01.2013 Gazette 2013/01)**

(54) **HYBRIDISCHER ANTRIEBSSTRANG MIT AKTIVER DREHSCHWINGUNGSDÄMPFUNG UND VERFAHREN ZUR DURCHFÜHRUNG DER AKTIVEN DREHSCHWINGUNGSDÄMPFUNG**

HYBRID DRIVE TRAIN HAVING AN ACTIVE TORSIONAL VIBRATION DAMPING AND METHOD FOR CARRYING OUT THE ACTIVE TORSIONAL VIBRATION DAMPING

CHAÎNE CINÉMATIQUE HYBRIDE DOTÉE D'UN AMORTISSEMENT ACTIF DE VIBRATIONS DE TORSION ET PROCÉDÉ D'AMORTISSEMENT ACTIF DE VIBRATIONS DE TORSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2011   DE 102011078249**
**09.02.2012   DE 102012201948**

(43) Veröffentlichungstag der Anmeldung:
**07.05.2014   Patentblatt 2014/19**

(73) Patentinhaber: **Schaeffler Technologies AG & Co. KG**
**91074 Herzogenaurach (DE)**

(72) Erfinder:
• **WERNER, Olaf**
 **77815 Bühl (DE)**
• **HUBER, Michael**
 **77654 Offenburg (DE)**
• **ANGRICK, Carsten**
 **77767 Appenweier (DE)**
• **GRAMANN, Matthias**
 **77871 Renchen (DE)**
• **DILZER, Martin**
 **77815 Bühl (DE)**

(56) Entgegenhaltungen:
WO-A1-01/76041          DE-A1- 4 422 732
DE-A1- 10 035 521      DE-A1- 10 217 218
DE-A1- 19 721 298      DE-A1-102010 037 503
US-A1- 2011 143 843    US-B1- 6 302 253

EP 2 726 353 B1

**Beschreibung**

Die Erfindung betrifft einen hybridischen Antriebsstrang mit aktiver Drehschwingungsdämpfung gemäß dem Oberbegriff des Anspruchs 1.

Brennkraftmaschinen weisen aufgrund ihres Funktionsprinzips einer über den Drehwinkel der Kurbelwelle diskontinuierlichen Verbrennung von Kraftstoff in den hierfür vorgesehenen Brennräumen von Zylindern oder Brennkammern ungleichmäßige Drehmomententwicklungen auf. Die hierdurch auftretenden Drehschwingungen werden in wohl bekannter Weise durch Drehschwingungsdämpfer wie Kupplungsscheibendämpfer, geteilte Schwungräder und dergleichen und/oder Drehschwingungstilger wie Fliehkraftpendel und dergleichen isoliert. Diese Schwingungsisolation erfolgt lediglich teilweise. Verbleibende Restschwingungen treten dabei in Resonanz mit Triebstrangeigenfrequenzen, die zu einem negativen Geräuschverhalten des Antriebsstrangs führen und/oder sich negativ auf die Lebensdauer der verwendeten Komponenten auswirken. Um den Isolationsgrad weiter zu verbessern, nimmt der technische Aufwand zu, so dass die einzusetzenden Isolationseinrichtungen wie Drehschwingungsdämpfer und/oder Drehschwingungstilger aus Bauraum- und/oder Kostengründen nicht immer umsetzbar sind. Beispielsweise können in einem Drehschwingungsdämpfer neben den verwendeten Bogenfedern einer einzigen Dämpfungsstufe weitere Dämpfungsstufen, ein zusätzlich auf den Drehschwingungsdämpfer abgestimmter Drehschwingungstilger und dergleichen notwendig werden. Weiterhin können vom Fahrer durch Eingriffe insbesondere durch entsprechende Änderung der Stellung des Fahrpedals Impulse in den Antriebsstrang eingeleitet werden, die zu Ruckel- oder Lastwechselschwingungen führen können.

Hybridische Antriebsstränge weisen neben der Brennkraftmaschine eine Elektromaschine auf, die den Antriebsstrang voll oder teilweise antreiben, im Schubbetrieb rekuperieren und die Brennkraftmaschine starten kann. Aus der DE 195 32 129 A1 ist dabei eine Elektromaschine bekannt, welche Drehschwingungen der Brennkraftmaschine kompensieren soll, indem mittels der Elektromaschine Gegenmomente geschaltet werden, die komplementär zu den Drehmomentspitzen der Brennkraftmaschine sind. Die entsprechend im Frequenzbereich der Drehschwingungen in dem mit der Elektromaschine verbundenen Akkumulator wie Bleiakkumulator zwischenzeitlich zu speichernden und abzurufenden Energiebeträge führen zu sehr hohen, für den Akkumulator schädlichen Lade- und Entladeströmen.

Ein Antriebsstrang gemäß dem Oberbegriff des Anspruchs 1 ist aus der DE 100 35 521 A1 bekannt.

Bezüglich weiteren Standes der Technik wird auf die DE 10 2010 037 503 A1, die DE 197 21 298 A1, die WO 2001/76041 A1, die US 6 302 253 B1, die DE 44 22 732 A1, die US 2011/143843 A1 und die DE 102 17 218 A1 verwiesen.

Aufgabe der Erfindung ist daher, einen hybridischen Antriebsstrang vorzuschlagen, welcher bei geringem technischem Aufwand eine verbesserte Isolierung von Drehschwingungen der Brennkraftmaschine ermöglicht.

Die Aufgabe wird durch die in Anspruch 1 angegebenen Merkmale gelöst.

Weitere vorteilhafte Ausgestaltungen der vorliegenden Erfindung sind in den abhängigen Ansprüchen angegeben.

Durch die Kombination einer aktiven Drehschwingungsdämpfung mittels der Elektromaschine, indem von dieser den Drehschwingungen der Brennkraftmaschine entsprechende positive oder negative Kompensationsmomente auf den Antriebsstrang übertragen werden, kann der Drehschwingungsdämpfer in einfacher Weise ausgebildet und auf die Anforderungen einer aktiven Drehschwingungsdämpfung optimiert werden. Die zwischen den beiden Schwungmassen in Umfangsrichtung wirksame Federeinrichtung kann dabei mittels linear ausgebildeter, kurzer Schraubenfedern ausgeführt werden, die auch bei hohen Drehzahlen verglichen mit Bogenfedern ein geringes Reibmoment aufweisen und einfacher herzustellen sind. Insbesondere bei kleinen Drehzahlen und während des Starts der Brennkraftmaschine durch die Elektromaschine können die Vorteile der aus Bogenfedern bestehenden Einrichtung durch eine aktive Drehschwingungsdämpfung mittels der Elektromaschine kompensiert werden.

Die sekundäre Schwungmasse ist nach der Erfindung ein- oder mehrteilig in den Rotor der Elektromaschine integriert, so dass Bauraumvorteile und ein einfacherer Aufbau des Antriebsstrangs erzielt werden. Dabei kann in der Elektromaschine deren bestromter Wicklungsteil im Rotor oder im Stator vorgesehen sein. Die Elektromaschine ist bevorzugt ein bürstenloser, elektronisch gesteuerter Elektromotor, dessen Drehzahl und Erregungswinkel mittels eines integrierten Inkrementalweg- oder Inkrementalwinkelsensors erfasst wird.

Die aktive Drehschwingungskompensation erfolgt bevorzugterweise, indem anhand von Parametern, beispielsweise Sensordaten oder aus diesen abgeleiteten Größen an dem zumindest einen Betriebspunkt ein Störmoment des Antriebsstrangs vor oder nach dem Drehschwingungsdämpfer ermittelt, ein Kompensationsmoment ermittelt und auf die Elektromaschine das Kompensationsmoment aufgeprägt wird.

Die Elektromaschine steht dabei in elektrischer Verbindung mit einem Speicher für elektrische Energie, beispielsweise einem Akkumulator wie Bleiakkumulator, Li-Ionen-Akkumulator und dergleichen, einem Leistungskondensator wie Gold-Cap-Kondensator und/oder dergleichen. Die für die aktiven Drehschwingungsdämpfungen notwendigen mechanischen Energien werden dabei gegenläufig zu dem zeitlichen Drehmomentverhalten der Brennkraftmaschine komplementär dem elektrischen Energiespeicher zugeführt beziehungsweise entzogen. Die über den vereinfachten, der Elektromaschine vorgeschalteten Drehschwingungsdämpfer übertragenen, noch verbleibenden Drehschwingungsanteile sind daher so abgeschwächt, dass ein für ein Kraftfahrzeug mit dem vorgeschlagenen Antriebsstrang vorgesehener elektrischer Ackumulator mit den Lade- und Entladeströmen nicht überlastet ist.

Zusätzlich kann in dem vorgeschlagenen Antriebsstrang parallel und/oder seriell zum Drehschwingungsdämpfer zumindest ein weiteres Dämpfungselement vorgesehen sein. Beispielsweise kann mit der Primärseite oder bevorzugt der Sekundärseite des Drehschwingungsdämpfers insbesondere ein Drehschwingungstilger wie beispielsweise ein drehzahladaptiver Drehschwingungstilger in Form eines Fliehkraftpendels wirksam verbunden sein.

Ein hinter dem Drehschwingungsdämpfer noch anliegendes, also von diesem nicht kompensiertes Störmoment kann beispielsweise abhängig von zumindest einem mittels zumindest eines Sensors gewonnenen Parameter in Form von das Störmoment repräsentierenden Kennfeldern, beispielsweise einem Momentenamplitudenkennfeld und Momentenphasenkennfeld in der Steuereinheit hinterlegt werden. Diese Kennfelder können beispielsweise empirisch oder mittels einer entsprechenden Simulation des hybridischen Antriebsstrangs aufgestellt und laufend an sich gegebenenfalls ergebende Änderungen des tatsächlichen Antriebsstrangs adaptiert werden. Die Momentenamplitudenkennfelder können beispielsweise abhängig von der Art und Qualität der verfügbaren Sensoren und deren Daten, von dem geforderten Isolationsgrad, beispielsweise vollständige oder nur teilweise erwünschte Drehschwingungsisolation des verbleibenden Störmoments durch die aktive Drehschwingungsdämpfung mittels der Elektromaschine, von der Temperatur des Antriebsstrangs oder dessen ausgewählten Bauteilen, Fertigungstoleranzen und dergleichen aufgespannt werden. Die Momentenamplitudenkennfelder können beispielsweise abhängig vom erwünschten Isolationsgrad, von einem in einem Getriebe des Antriebsstrangs eingelegten, sich auf die Lage der Triebstrangresonanz auswirkenden Gangs, von einem Nettomoment wie Wirkmoment der Brennkraftmaschine, der Temperatur, Fertigungstoleranzen und dergleichen aufgespannt werden. Die Kennfelder können in eine Vorsteuerung der Elektromaschine integriert sein, so dass beispielsweise ein das zeitlich variierende Störmoment zumindest teilweise phasenselektiv kompensierendes Kompensationsmoment den übrigen aktuellen Funktionen der Elektromaschine überlagert wird. Diese sind beispielsweise eine Startfunktion der Brennkraftmaschine, eine Generatorfunktion im Betrieb der Brennkraftmaschine, eine Unterstützungsfunktion der Brennkraftmaschine im Zugbetrieb, eine Generatorfunktion im Schubbetrieb (Rekuperation), eine Antriebsfunktion bei stillgelegter Brennkraftmaschine und dergleichen.

Eine vollständige Schwingungsisolation hinter der Elektromaschine kann erzielt werden, indem das Störmoment nach dem Drehschwingungsdämpfer exakt gegenphasig mittels des von der Elektromaschine eingeleiteten Kompensationsmoments kompensiert wird. Hierbei kann beispielsweise eine Regelung der Winkelbeschleunigung des Rotors und damit des Ausgangs des Drehschwingungsdämpfers und damit Eingang des Getriebes auf Null erfolgen. Es hat sich jedoch als vorteilhaft erwiesen, die Restanregung nach der Elektromaschine nicht exakt zu regeln sondern im Sinne einer einfachen und robusten Regelung lediglich eine teilweise Isolation mit einem verbleibenden, nicht störenden Drehschwingungsanteil vorzunehmen.

Die Regelung des Kompensationsmoments kann mittels eines einen Drehkennwert wie Winkel, Winkelgeschwindigkeit bzw. Drehzahl oder bevorzugt Winkelbeschleunigung der sekundären Schwungmasse regelnden P-Reglers erfolgen. Dabei können abhängig von Betriebspunkten der aktiven Drehschwingungsdämpfung unterschiedliche Reglerkonzepte eingesetzt werden. Beispielsweise kann ein einfacher P-Regler während eines Starts der Brennkraftmaschine durch die Elektromaschine auf eine Drehzahldifferenz zwischen der Wellen der primären und sekundären Schwungmasse geregelt werden. Hierbei kann bei verminderter Reibung des Drehschwingungsdämpfers ein gegebenenfalls vorhandener Resonanzdurchgang kompensiert werden.

Alternativ oder zusätzlich kann der zumindest eine Betriebspunkt einen Leerlauf der Brennkraftmaschine darstellen, wobei eine Leerlaufregelung der Brennkraftmaschine mittels der Elektromaschine erfolgt, indem ein P-Regler, bevorzugt ein PI-Regler das Kompensationsmoment auf eine Einhaltung einer mittleren Leerlaufdrehzahl der Kurbelwelle regelt. Hierbei kann die Leerlaufregelung der Brennkraftmaschine im Steuergerät der Brennkraftmaschine entfallen, da die Brennkraftmaschine mittels des durch die Elektromaschine eingetragenen Kompensationsmoments beruhigt wird.

Weiterhin kann alternativ oder zusätzlich der zumindest eine Betriebspunkt auftretende, beispielsweise vom Fahrer durch Betätigung des Gaspedals eingebrachte Ruckel- oder Lastwechselschwingungen darstellen, wobei ein Regler, bevorzugt ein PD-Regler das Kompensationsmoment auf eine Kompensation von Drehungleichförmigkeiten der sekundären Schwungmasse regeln kann. Wie bereits zuvor beschrieben, kann eine Kompensation von nach dem Drehschwingungsdämpfer verbleibenden Drehschwingungen aktiv mittels entsprechender Kennfelder erfolgen. Hierbei kann ein P-Regler zur Minimierung von Drehungleichförmigkeiten der Drehzahl der sekundären Schwungmasse beispielsweise anhand der Rotordrehzahlkennwerte eingesetzt werden.

Die Regelung und aktive Kompensation der nach dem Drehschwingungsdämpfer auftretenden Drehschwingungen erfolgt durch Auswertung der Sensorsignale bevorzugt bereits im Antriebsstrang vorhandener Sensoren. Beispielsweise kann das Schnittmoment des Dämpfers sowie Störmoment nach dem Drehschwingungsdämpfer aus den Drehkennwerten der Massen der primären und sekundären Schwungmasse, dem aus dem Steuergerät der Brennkraftmaschine beispielsweise über CAN-Bus verfügbaren Motormoment der Brennkraftmaschine berechnet und/oder in vergleichbarer Weise ermittelt werden. Hierbei sind die Drehkennwerte der Kurbelwelle für die primäre und die Drehkennwerte des Rotors für die sekundäre Schwungmasse mittels der entsprechenden Sensoren zugänglich. In gleicher Weise ist eine Differenzdrehzahl zwischen primärer und sekundärer Schwungmasse aus diesen Sensoren ableitbar. Untersuchungen haben gezeigt, dass ein genügend genaues Signal zur Bestimmung der Phasenlage der Kurbelwelle aus einem Geber des oberen Totpunkts eines oder mehrerer Zylinder der Brennkraftmaschine gewonnen werden kann. Der Winkel des Rotors wird bevorzugt aus der qualitativen Abtastung des Sensors zur Kommutierung der Elektromaschine in ausreichender Genauigkeit gewonnen.

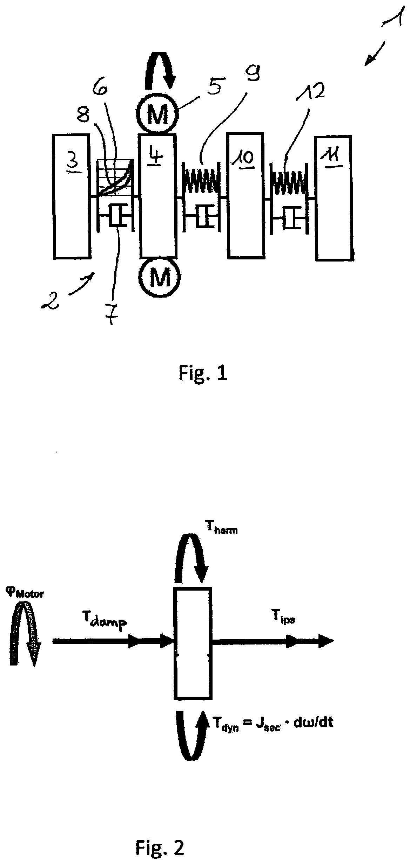

Die Erfindung wird anhand der Figuren 1 und 2 näher erläutert. Dabei zeigen:

Figur 1 eine schematische Darstellung eines hybridischen Antriebsstrangs zur aktiven Drehschwingungsdämpfung und

Figur 2 ein Schwingungsmodell des Antriebsstrangs der Figur 1.

Die Figur 1 zeigt eine schematische Darstellung des hybridischen Antriebsstrangs 1 mit dem Drehschwingungsdämpfer 2, dessen primäre Schwungmasse 3 mit der Kurbelwelle einer nicht dargestellten Brennkraftmaschine verbunden ist und von dieser angetrieben wird. Die sekundäre Schwungmasse 4 ist zugleich der Rotor der Elektromaschine 5, die damit wirksam am Ausgang des Drehschwingungsdämpfers 2 angeordnet ist. Die Schwungmassen 3, 4 des Drehschwingungsdämpfers 2 sind gegeneinander entgegen der Wirkung der Federeinrichtung 6 und der Reibeinrichtung 7 relativ verdrehbar angeordnet. Die in Form deren Kennlinien dargestellten Schraubenfedern 8 sind kurz und linear ausgebildet und über den Umfang angeordnet. Aufgrund der kurzen und linearen Ausbildung der Schraubenfedern 8 ist das Reibmoment der Reibeinrichtung 7 vorteilhafterweise gering. Das Ausgangsteil des Drehschwingungsdämpfers 2 in Form der sekundären Schwungmasse 4 ist über die reibungs- und drehelastisch behaftete Getriebeeingangswelle 9 schwingungstechnisch an das Getriebe 10 gekoppelt. Das Getriebe 10 wiederum ist über deren Befestigung und insbesondere über die drehelastischen und reibungsbehafteten Antriebswelle(n) 12 schwingungstechnisch mit der Fahrzeugkarosserie 11 gekoppelt. Hierdurch bildet sich ein Schwingungssystem mit Eigenfrequenzen, die durch Triebstrangschwingungen angeregt werden können und damit eine Geräuschbelastung und mechanische Belastung des Fahrzeugs und dessen Komponenten bewirken können.

Um in dem hybridischen Antriebsstrang 1 insbesondere mit Brennkraftmaschinen mit schwer zu dämpfenden Drehschwingungen, beispielsweise Zwei- oder Dreizylinder-Motoren, den Bauraum gering und die mechanische Komplexität des Drehschwingungsdämpfers 2 einfach in Form der Federeinrichtung 6 ausbilden zu können, erfolgt eine weitere, nicht von dem Drehschwingungsdämpfer 2 bewerkstelligte, an der sekundären Schwungmasse 4 anstehende Restschwingung in Form eines dynamischen und drehwinkelabhängigen Störmoments mittels einer aktiven Drehschwingungsdämpfung mittels der Elektromaschine 5.

Aus der Figur 2 gehen hierzu die Drehmomentverläufe des Antriebsstrangs 1 hervor. Eine bevorzugte Steuerungsstrategie zur Kompensation der nach dem Drehschwingungsdämpfer 2 verbleibenden Drehschwingungen wird mittels des Bezugs des Kompensationsmoments $T_{harm}$ der Elektromaschine 5 zur Summe der übrigen auftretenden Momenten wie dem Dämpfermoment $T_{damp}$ am Eingang der primären Schwungmasse 3, dem aus dem Massenträgheitsmoment $J_{sec}$ der sekundären Schwungmasse 4 und deren Drehwinkeländerung $d\omega$ im Zeitintervall dt nach der Gleichung

$$T_{dyn} = J_{sec} * d\omega/dt$$

mit dem dynamischen Moment entsprechenden Störmoment $T_{dyn}$ der sekundären Schwungmasse 4 und dem Abtriebsmoment $T_{ips}$ an der Getriebeeingangswelle 9 ermittelt. Das Massenträgheitsmoment $J_{sec}$ ergibt sich dabei aus dem Massenträgheitsmoment der sekundären Schwungmasse 4 und dem Massenträgheitsmoment des Rotors der Elektromaschine 5.

Hierbei ergibt sich nach Auflösung der Gleichung des Gesamtmoments $T_{sum}$

$$T_{sum} = T_{harm} + T_{damp} + T_{ips} - T_{dyn}$$

das Kompensationsmoment zu

$$T_{harm} = -T_{damp} - T_{ips} + T_{dyn}.$$

Hierbei wird das Kompensationsmoment $T_{harm}$ phasenselektiv zum vom Drehwinkel $\varphi_{Motor}$ der Kurbelwelle abhängig erzeugten Störmoment $T_{dyn}$ von der Elektromaschine 5 auf die sekundäre Schwungmasse 4 aufgebracht. Da der zeitliche Verlauf des Summenmoments $T_{sum}$ nicht ermittelbar ist, wird auf phasenselektive Kennfelder zurückgegriffen, welche abhängig von bekannten oder aus Sensordaten ermittelbaren Parametern wie Drehzahlen, Beschleunigungen, Momente und dergleichen aufgespannt sind. Bevorzugt werden als repräsentative Parameter Signale eines oder mehrerer Geber zur Ermittlung des oberen Totpunkts eines oder mehrerer Zylinder der Brennkraftmaschine verwendet. Zur Ermittlung eines Differenzwinkels der Kurbelwelle und des Rotors der Elektromaschine 5 wird der Sensor wie Inkrementwinkelsensor der Elektromaschine 5, welcher zur Erfassung des Drehwinkels des Rotors zur Kommutierung der Elektromaschine 5 vorgesehen ist, genutzt.

Es hat sich gezeigt, dass in einer Realumgebung des Antriebsstrangs 1 eine infolge zeitlicher Verzögerung resultierende Drehwinkelabweichung kleiner 10° bevorzugt kleiner 6° zur aktiven Drehschwingungsdämpfung, insbesondere eines Vierzylindermotors, vorteilhaft ist. Dies bedeutet, dass auf das Störmoment $T_{dyn}$ innerhalb einer Winkelverlagerung von 10° bzw. 6° eine phasenselektive Antwort des Kompensationsmoments $T_{harm}$ auf die sekundäre Schwungmasse 4 aufgeprägt werden sollte. Es hat sich daher am Beispiel eines Vierzylindermotors und einer Dämpfung einer Schwingungsordnung gleich zwei bei einer Drehzahl von 3000 1/min der Kurbelwelle eine Abtastfrequenz von 10kHz als vorteilhaft erwiesen. Dies entspricht einem Phasenwinkel von 3,6°.

**Bezugszeichenliste**

| | |
|---|---|
| 1 | Antriebsstrang |
| 2 | Drehschwingungsdämpfer |
| 3 | Schwungmasse |
| 4 | Schwungmasse |
| 5 | Elektromaschine |
| 6 | Federeinrichtung |
| 7 | Reibeinrichtung |
| 8 | Schraubenfeder |
| 9 | Getriebeeingangswelle |
| 10 | Getriebe |
| 11 | Fahrzeugkarosserie |
| 12 | Antriebswelle |
| $T_{damp}$ | Dämpfermoment |
| $T_{harm}$ | Kompensationsmoment |
| $T_{ips}$ | Abtriebsmoment |
| $T_{sum}$ | Summenmoment |
| $\varphi_{Motor}$ | Drehwinkel |

**Patentansprüche**

1. Antriebsstrang (1), der aufweist:

eine drehschwingungsbehaftete Brennkraftmaschine mit einer Kurbelwelle,
ein Getriebe (10) mit einer Getriebeeingangswelle (9),
einen mit der Kurbelwelle wirkverbundenen, zumindest einen Betriebspunkt geringer Schwingungsisolation der Drehschwingungen enthaltenden Drehschwingungsdämpfer (2) mit einer der Kurbelwelle zugeordneten primären Schwungmasse (3) und einer gegenüber dieser entgegen der Wirkung einer Federeinrichtung (6) relativ und begrenzt verdrehbaren, der Getriebeeingangswelle (9) zugeordneten sekundären Schwungmasse (4), und

eine Elektromaschine (5) mit einer mit der Getriebeeingangswelle (9) wirkverbundenen drehenden Masse sowie einer Steuereinheit, wobei die Elektromaschine (5) mittels der Steuereinheit auf ein Kompensationsmoment ($T_{harm}$) regelbar ist, das ein an einem Betriebspunkt auftretendes drehschwingungsbehaftetes Störmoment ($T_{dyn}$) kompensiert,

**dadurch gekennzeichnet, dass**

die Federeinrichtung (6) aus linear ausgebildeten Federn gebildet ist, und
die sekundäre Schwungmasse (4) des Drehschwingungsdämpfers ein- oder mehrteilig in einen Rotor der Elektromaschine (5) integriert ist.

2. Antriebsstrang (1) nach Anspruch 1, **dadurch gekennzeichnet, dass** parallel oder seriell zum Drehschwingungsdämpfer (2) ein weiteres Dämpfungselement vorgesehen ist.

3. Antriebsstrang nach Anspruch 1, **dadurch gekennzeichnet, dass** anhand von Parametern an dem Betriebspunkt das Störmoment ($T_{dyn}$) des Antriebsstrangs (1) nach dem Drehschwingungsdämpfer (2) ermittelt, ein Kompensationsmoment ($T_{harm}$) ermittelt und das Kompensationsmoment ($T_{harm}$) auf die Elektromaschine (5) aufgeprägt wird.

4. Antriebsstrang nach Anspruch 3, **dadurch gekennzeichnet, dass** ein Regeln des Kompensationsmoments ($T_{harm}$) mittels eines einen Drehkennwert der sekundären Schwungmasse (4) regelnden P-Reglers erfolgt.

5. Antriebsstrang nach Anspruch 3 oder 4, **dadurch gekennzeichnet, dass** abhängig von einem mittels eines Sensors gewonnenen Parameters ein das Störmoment ($T_{dyn}$) repräsentierendes Momentenamplitudenkennfeld und Momentenphasenkennfeld in der Steuereinheit gespeichert ist.

6. Antriebsstrang nach einem der Ansprüche 3 bis 5, **dadurch gekennzeichnet, dass** ein Phasenverlauf des Störmoments ($T_{dyn}$) mittels eines Gebers des oberen Totpunkts der Brennkraftmaschine oder aus weiteren bekannten Sensordaten ermittelt wird.

7. Antriebsstrang nach einem der Ansprüche 3 bis 6, **dadurch gekennzeichnet, dass**
der Betriebspunkt einen Leerlauf der Brennkraftmaschine darstellt, und
eine Leerlaufregelung der Brennkraftmaschine mittels der Elektromaschine (5) erfolgt, indem ein Regler das Kompensationsmoment ($T_{harm}$) auf ein Einhalten einer mittleren Leerlaufdrehzahl der Kurbelwelle regelt.

8. Antriebsstrang nach einem der Ansprüche 3 bis 7, **dadurch gekennzeichnet, dass**
der Betriebspunkt auftretende Ruckel- oder Lastwechselschwingungen darstellt, und
ein Regler das Kompensationsmoment ($T_{harm}$) auf
eine Kompensation von Drehungleichförmigkeiten
der sekundären Schwungmasse (4) regelt.

**9.** Antriebsstrang nach einem der Ansprüche 3 bis 8,
**dadurch gekennzeichnet, dass**
der Betriebspunkt einen Voll- oder Teillastbetrieb
darstellt, und
ein Regler das Kompensationsmoment ($T_{harm}$) auf
eine Kompensation von Drehungleichförmigkeiten
der sekundären Schwungmasse (4) regelt.

**10.** Antriebsstrang nach einem der Ansprüche 3 bis 9,
**dadurch gekennzeichnet, dass**
der Betriebspunkt einen Start der Brennkraftmaschine darstellt, und
ein Regler eine Differenzdrehzahl zwischen der primären Schwungmasse (3) und der sekundären
Schwungmasse (4) auf Null regelt.

**Claims**

**1.** A drive train (1), having:

> an internal combustion engine affected by tor-
> sional vibrations with a crankshaft,
> a gearbox (10) with a gear input shaft (9),
> a torsional vibration damping (2) operatively
> connected to the crankshaft and containing at
> least one operating point of low vibration isola-
> tion of the torsional vibrations, with a primary
> centrifugal mass (3) associated with the crank-
> shaft, and a secondary centrifugal mass (4) as-
> sociated with a gear input shaft (9) and being
> rotatable contrary to said primary centrifugal
> mass relative to and to a limited extent against
> the action of a spring device (6), and
> an electric motor (5) with a rotating mass oper-
> atively connected to the gearbox input shaft (9)
> and a control unit, wherein
> the electric motor (5) can be regulated by means
> of the control unit to a compensation torque
> ($T_{harm}$), which compensates for a disturbance
> torque ($T_{dyn}$) occurring at an operating point and
> affected by torsional vibrations,
> **characterised in that**
> the spring device (6) is formed by linear springs,
> and
> the secondary centrifugal mass (4) of the tor-
> sional vibration damping is integrated in one or
> more parts into a rotor of the electric motor (5).

**2.** The drive train (1) according to claim 1, **characterised in that** a further damping element is provided in parallel or in series with the torsional vibration
damping (2).

**3.** The drive train according to claim 1, **characterised
in that**, on the basis of parameters at the operating
point, the disturbance torque ($T_{dyn}$) of the drive train
(1) after the torsional vibration damping (2) is determined, a compensation torque ($T_{harm}$) is determined
and the compensation torque ($T_{harm}$) is imprinted on
the electric motor (5).

**4.** The drive train according to claim 3, **characterised
in that** the compensation torque ($T_{harm}$) is regulated
by means of a P controller regulating a rotational
characteristic value of the secondary centrifugal
mass (4).

**5.** The drive train according to claim 3 or 4, **characterised in that**, depending on a parameter obtained by
means of a sensor, a torque amplitude characteristic
map and torque phase characteristic map representing the disturbance torque ($T_{dyn}$) is stored in the control unit.

**6.** The drive train according to any one of claims 3 to
5, **characterised in that** a phase profile of the disturbance torque ($T_{dyn}$) is determined by means of an
encoder of the upper dead centre of the internal combustion engine or from other known sensor data.

**7.** The drive train according to any one of claims 3 to
6, **characterised in that**
the operating point represents an idling of the internal
combustion engine, and
an idling control of the internal combustion engine
by means of the electric motor (5) takes place by a
controller regulating the compensation torque
($T_{harm}$) to maintain an average idling speed of the
crankshaft.

**8.** The drive train according to any one of claims 3 to
7, **characterised in that**
the operating point represents jerk or load change
vibrations, and
a controller regulates the compensation torque
($T_{harm}$) to compensate for rotational irregularities of
the secondary centrifugal mass (4).

**9.** The drive train according to any one of claims 3 to
8, **characterised in that**
the operating point represents full or partial load operation, and
a controller regulates the compensation torque
($T_{harm}$) to compensate for rotational irregularities of
the secondary centrifugal mass (4).

**10.** The drive train according to any one of claims 3 to
9, **characterised in that**

the operating point represents a start of the internal combustion engine, and
a controller regulates a differential speed between the primary centrifugal mass (3) and the secondary centrifugal mass (4) to zero.

## Revendications

1. Chaîne cinématique (1) comprenant :

   un moteur à combustion interne soumis à des vibrations torsionnelles comportant un vilebrequin,
   une transmission (10) comportant un arbre d'entrée de transmission (9),
   un amortisseur de vibrations torsionnelles (2) raccordé de manière fonctionnelle au vilebrequin et comprenant au moins un point de fonctionnement d'une faible isolation des vibrations des vibrations torsionnelles, comportant une masse d'inertie (3) primaire affectée au vilebrequin et une masse d'inertie (4) secondaire, pouvant tourner de manière relative et limitée par rapport à celle-ci contre l'action d'un dispositif à ressort (6), affectée à l'arbre d'entrée de transmission (9), et
   une machine électrique (5) comportant une masse rotative raccordée de manière fonctionnelle à l'arbre d'entrée de transmission (9) ainsi qu'une unité de commande, dans laquelle
   la machine électrique (5) peut être régulée, au moyen de l'unité de commande, à un couple compensateur ($T_{harm}$), lequel compense un couple perturbateur ($T_{dyn}$) soumis aux vibrations torsionnelles se produisant à un point de fonctionnement,
   **caractérisée en ce que**
   le dispositif à ressort (6) est formé des ressorts conçus linéaires, et
   la masse d'inertie (4) secondaire de l'amortisseur de vibrations torsionnelles est intégré en au moins une partie dans un rotor de la machine électrique (5).

2. Chaîne cinématique (1) selon la revendication 1, **caractérisée en ce qu'**un autre élément d'amortissement est situé parallèlement ou en série par rapport à l'amortisseur de vibrations torsionnelles (2).

3. Chaîne cinématique selon la revendication 1, **caractérisée en ce que**, en fonction des paramètres au point de fonctionnement, le couple perturbateur ($T_{dyn}$) de la chaîne cinématique (1) en aval de l'amortisseur de vibrations torsionnelles (2) est déterminé un couple compensateur ($T_{harm}$) est déterminé et le couple compensateur ($T_{harm}$) est appliqué à la machine électrique (5).

4. Chaîne cinématique selon la revendication 3, **caractérisée en ce que** le couple compensateur ($T_{harm}$) est effectué au moyen d'un régulateur P régulant une valeur de rotation de la masse d'inertie (4) secondaire.

5. Chaîne cinématique selon la revendication 3 ou 4, **caractérisée en ce que**, en fonction d'un paramètre obtenu au moyen d'un capteur, une cartographie d'amplitude du couple et une cartographie de phase du couple représentant le couple perturbateur ($T_{dyn}$) sont sauvegardées dans l'unité de commande.

6. Chaîne cinématique selon l'une quelconque des revendications 3 à 5, **caractérisée en ce qu'**une courbe de phase du couple perturbateur ($T_{dyn}$) est déterminé au moyen d'un capteur du point mort supérieur du moteur à combustion interne ou à partir d'autres données de capteur connues.

7. Chaîne cinématique selon l'une quelconque des revendications 3 à 6, **caractérisée en ce que**
   le point de fonctionnement représente le ralenti du moteur à combustion interne, et
   une régulation du ralenti du moteur à combustion interne est effectuée au moyen de la machine électrique (5), lors de laquelle un régulateur règle le couple compensateur ($T_{harm}$) de manière à maintenir un régime de ralenti moyen du vilebrequin.

8. Chaîne cinématique selon l'une quelconque des revendications 3 à 7, **caractérisée en ce que** le point de fonctionnement représente des vibrations de changement de charge ou des à-coups, et un régulateur règle le couple compensateur ($T_{harm}$) de manière à compenser les irrégularités de rotation dans le masse d'inertie (4) secondaire.

9. Chaîne cinématique selon l'une quelconque des revendications 3 à 8, **caractérisée en ce que** le point de fonctionnement représente un régime de charge pleine ou de charge partielle, et un régulateur règle le couple compensateur ($T_{harm}$) de manière à compenser les irrégularités de rotation dans le masse d'inertie (4) secondaire.

10. Chaîne cinématique selon l'une quelconque des revendications 3 à 9, **caractérisée en ce que** le point de fonctionnement représente un démarrage du moteur à combustion interne, et un régulateur règle une vitesse de rotation différentielle entre la masse d'inertie (3) primaire et la masse d'inertie (4) secondaire à zéro.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19532129 A1
- DE 10035521 A1
- DE 102010037503 A1
- DE 19721298 A1
- WO 200176041 A1
- US 6302253 B1
- DE 4422732 A1
- US 2011143843 A1
- DE 10217218 A1